# EUROPÄISCHE PATENTANMELDUNG

(11) **EP 3 719 553 A1**
(43) Veröffentlichungstag der Anmeldung: **07.10.2020**
(21) Anmeldenummer: 20164289.9
(22) Anmeldetag: 19.03.2020
(51) Int. Cl.: G02B 6/44, E04B 1/76, F16L 5/02, H02G 3/08, H02G 3/22, G02B 6/42

(54) **VORRICHTUNG ZUM DURCHFÜHREN WENIGSTENS EINER LEITUNG DURCH EINE WANDBOHRUNG**

(30) Priorität: 05.04.2019 DE 102019108980
(71) Anmelder: Langmatz GmbH, 82467 Garmisch-Partenkirchen (DE)
(72) Erfinder:
(74) Vertreter: Flosdorff, Jürgen

(57) **Zusammenfassung**

Die Vorrichtung zum Durchführen wenigstens einer Leitung (5) durch eine Wandbohrung, die durch eine Gebäudewand führt, mit einem die Wandbohrung an der Gebäudeaußenseite überdeckenden, an der Gebäudewand anliegenden äußeren Klemmkörper (2), der ein Loch (4) zum Einführen der Leitung hat, und einem die Wandbohrung an der Gebäudeinnenseite überdeckenden, an der Gebäudewand anliegenden inneren Klemmkörper (7), durch den die Leitung austritt, ist dadurch gekennzeichnet, dass die Leitung wenigstens eine Speedpipe oder wenigstens ein Kabel ohne ein umgebendes Schutzrohr sein kann, dass mit dem äußeren Klemmkörper an dessen Innenseite ein Lochrohr (3) verbunden ist, das die wenigstens eine Speedpipe oder das wenigstens eine Kabel in der Wandbohrung mit radialem Abstand umgibt, dass der innere Klemmkörper einen rohrförmigen Abschnitt (6), durch den die wenigstens eine Speedpipe oder das wenigstens eine Kabel durchführbar ist und der in die Wandbohrung eingesetzt wird, und einen im unbelasteten Zustand im Winkel von 90° dazu verlaufenden rahmenartigen Abschnitt (8) aufweist, der an die Gebäudewand anpressbar ist, dass an den rohrförmigen Abschnitt des inneren Klemmkörpers außerhalb der Wandbohrung ein rinnenförmiger Abschnitt (9) anschließt, aus dem die wenigstens eine Speedpipe oder das wenigstens eine Kabel zwischen voneinander beabstandete Stege (14, 15) des rahmenartigen Abschnitts führbar ist, zwischen denen die wenigstens eine Speedpipe oder das wenigstens eine Kabel entlang einer gekrümmten Führungsbahn (10) des rahmenartigen Abschnitts unter Einhaltung eines zulässigen Mindestradius zu einer Austrittsöffnung (12) aus dem inneren Klemmkörper führbar ist, und dass an einem Steg (15) der voneinander beabstandete Stege (14, 15) ein drehbarer Riegel (13) befestigt ist, der eine Auflaufschräge oder Steigung (19) hat, die der Führungsbahn gegenüber liegt und die Austrittsöffnung für die wenigstens eine Speedpipe oder das wenigstens eine Kabel je nach Drehposition des Riegels begrenzt.

## Beschreibung

Die Erfindung betrifft eine Vorrichtung zum Durchführen wenigstens einer Leitung durch eine Wandbohrung, die durch eine Gebäudewand führt, mit einem die Wandbohrung an der Gebäudeaußenseite überdeckenden, an der Gebäudewand anliegenden äußeren Klemmkörper, der ein Loch zum Einführen der Leitung hat, und einem die Bohrung an der Gebäudeinnenseite überdeckenden, an der Gebäudewand anliegenden Klemmkörper, durch den die Leitung austritt.

Die EP 2 410 222 A1 offenbart eine Vorrichtung zum Befestigen und Abdichten einer durch eine Wandöffnung einer Gebäudewand führenden Leitung, bei der es sich um ein Leer-Rohr handelt, das beispielsweise ein Wasserrohr, ein Gasrohr oder eine Telekommunikationsleitung aufnimmt. Dieses Leer-Rohr erfordert eine Wandbohrung mit einem Durchmesser von wenigstens 40 mm, deren Ausbildung mit einem beträchtlichen Arbeitsaufwand verbunden ist.

Die vorliegende Erfindung sieht dagegen vor, dass wenigstens eine Speed-Pipe oder wenigstens ein Kabel ohne ein derartiges größeres Leer-Rohr oder Schutzrohr durch die Wandbohrung hindurchgeführt wird, wobei eine Speed-Pipe meist einen Durchmesser von 7 mm, 10 mm oder 12 mm hat und ein durch die Wandbohrung geführtes Kabel auch dicker sein kann. Die erfindungsgemäße Vorrichtung kommt wegen des fehlenden Leer-Rohrs mit einem Durchmesser von etwa 20 mm bis 25 mm aus, so dass diese Wandbohrung durch eine Handbohrmaschine hergestellt werden kann, was mit einem erheblich verringerten Arbeitsaufwand verbunden ist.

Wenn eine derartige Leitung durch eine Wandbohrung in ein Gebäude eingeführt wird, muss sie in der Wand mechanisch befestigt werden, und der Zwischenraum zwischen der Leitung und der Wand muss gegen den Durchtritt von Wasser und Gas abgedichtet werden. Hierzu ist es aus der EP 2 410 222 A1 bekannt, das Leer-Rohr durch ein Lochrohr größeren Durchmessers hindurch zu führen. In dieses Lochrohr wird gemäß der Offenbarung der EP 2 410 222 A1 eine zunächst fließfähige, dann aufschäumende und erhärtende Füllsubstanz eingefüllt, die aus einer Vielzahl von über den Umfang verteilten kleinen Löchern aus dem umgebenden Lochrohr austritt und Hohlräume in der Wandbohrung ausfüllt, so dass der Zwischenraum der Wandbohrung abgedichtet wird.

Wenn eine Speedpipe durch eine Wandbohrung und die beiderseitigen Klemmkörper hindurch geführt ist, werden zu einem späteren Zeitpunkt Glasfasern in die zunächst leere Speedpipe eingeblasen. Da bei Glasfasern die Dämpfung unzulässig steigt, wenn ihr minimaler Biegeradius unterschritten wird, ist es wichtig, dass Speedpipes so durch die Wandbohrung und die beiderseitigen Klemmkörper geführt werden, dass ihr Biegeradius an keiner Stelle den zulässigen minimalen Biegeradius unterschreitet. Ein kritischer Bereich liegt in dem an der Gebäudeinnenseite anliegenden Klemmkörper, in dem die Speedpipe nach horizontalem oder schrägen Verlauf durch die Wandbohrung bevorzugt nach oben umgelenkt wird, damit die Speedpipe nach dem Austritt aus der Wandbohrung an einen an der Wand über der Wandbohrung angeordneten GF-Abschlusspunkt angeschlossen werden kann. Dabei sollte verhindert werden, dass die Speedpipe in schräg von der Wand weg weisender Richtung aus dem an der Gebäudewand anliegenden Klemmkörper austritt, da es zur Beschädigung der durch die Speedpipe hindurchgeführten Glasfasern kommen kann, wenn die schräg zur Wandfläche ausgetretene Speedpipe von Hand zur Wand hin abgebogen wird.

Der vorliegenden Erfindung liegt die Aufgabe zugrunde, eine Vorrichtung der betrachteten Art anzugeben, bei der die Austrittrichtung von Speedpipes unterschiedlicher Dicke, gegebenenfalls von zwei oder mehr Speedpipes, so einstellbar ist, dass sie unter Einhaltung des zulässigen minimalen Biegeradius nahe der Wandfläche verläuft,

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Der innere Klemmkörper der erfindungsgemäßen Vorrichtung enthält einen rohrförmigen Abschnitt, durch den wenigstens eine Speedpipe oder wenigstens ein Kabel durchführbar ist, und der in die Wandbohrung eingesetzt wird Im Fall einer horizontalen Wandbohrung verläuft ein rahmenartiger Abschnitt in einem Winkel von etwa 90° zu dem rohrförmigen Abschnitt, der an die Gebäudewand anpressbar ist. Wie weiter unten ausgeführt wird, kann der rohrförmige Abschnitt durch biegbare Verbindungselemente, vorzugsweise Stege, mit dem rahmenartigen Abschnitt verbunden sein, so dass der Winkel zwischen dem rohrförmigen Abschnitt und dem rahmenartigen Abschnitt veränderbar ist, wenn die Wandbohrung nicht horizontal, sondern schräg durch die Wand führt.

Die Erfindung sieht außerdem vor, dass sich der rohrförmige Abschnitt des inneren Klemmkörper außerhalb der Wandbohrung rinnenförmig fortsetzt, beispielsweise U-förmig, so dass die wenigstens eine Speedpipe (oder das wenigstens eine Kabel) nach oben zwischen voneinander beabstandete Stege des rahmenartigen Abschnitts geführt werden kann. Dabei enthält der rahmenartige Abschnitt eine gekrümmte Führungsbahn, deren Radius den zulässigen Mindestradius der Glasfaser nicht unterschreitet, so dass die Speedpipe sich ohne Gefahr eines Bruchs der Glasfasern an die gekrümmte Führungsbahn anlegen kann. Nahe der Austrittöffnung für die Speedpipes (oder Kabel) ist erfindungsgemäß ein drehbarer Riegel angeordnet, der eine Exzenterfläche hat, die der Führungsbahn gegenüber liegt. Durch Drehen des Riegels, der an einem Steg des die Führungsbahn seitlich begrenzenden Stegpaares befestigt ist, wird die Größe und Ausrichtung der Austrittsöffnung für die Speedpipe begrenzt, so dass durch die veränderte Lage der Exzenterfläche die Richtung der Speedpipe beim Austritt aus dem inneren Klemmkörper einstellbar ist. Dies trifft für alle Durchmesser der durch die erfindungsgemäße Vorrichtung hindurchgeführte Speedpipes (oder Kabel) zu. Die Austrittsrichtung kann dabei so eingestellt werden, dass die austretende Speedpipe nahe der Wand im flachen Winkel auf diese zu oder parallel zu dieser verläuft.

Der innere Klemmkörper besteht in vorteilhafter Ausgestaltung der Erfindung aus einem thermoplastischen Kunststoff wie ABS, der bei dünner Wandstärke verformbar bzw. biegbar und bei größerer Wandstärke starr ist. Dies ermöglicht es, den starren Riegel über ein angeformtes Filmscharnier mit einer seitlichen Randkante des zugehörigen starren Stegs zu verbinden, so dass der Riegel um diese Randkante drehbar ist. Durch das Drehen des Riegels und damit seiner Exzenterfläche wird die Austrittsöffnung für die Speedpipe so verändert, dass die Speedpipe in der gewünschten Ausrichtung aus dem inneren Klemmkörper austritt.

In weiterer Ausgestaltung der Erfindung wird vorgeschlagen, dass der Riegel eine kreisbogenförmige Verzahnung hat, die in eine kreisbogenförmige Verzahnung an dem gegenüber angeordneten Steg eingreift, wodurch die eingestellte Drehposition des Riegels fixiert wird.

Zusätzlich kann vorgesehen sein, dass der Riegel mit einem hakenförmigen Ansatz versehen ist, der in eine gegenüberliegende Ausnehmung einrasten kann und die einmal eingestellte Drehposition des Riegels auch dann aufrecht erhält, wenn das Filmscharnier einmal brechen sollte.

Wie bereits oben erwähnt ist, kann der starre rohrförmige Abschnitt über biegbare Stege einstückig mit dem starren rahmenartigen Abschnitt des inneren Klemmkörper verbunden sein, so dass der Winkel zwischen dem rohrförmigen Abschnitt und dem rahmenartigen Abschnitt veränderbar ist. Außerdem ist das Lochrohr vorteilhafter Weise durch ein Gelenk mit dem äußeren Klemmkörper verbunden, so dass die beiden Klemmkörper sowohl bei horizontaler als auch im Winkel hierzu durch die Gebäudewand führender Wandbohrung dicht an die Gebäudewand anpressbar sind.

Der rohrförmige Abschnitt kann nach Art eines Dübels mit außen abstehenden Flügeln ausgebildet sein, so dass er klemmend in die Wandbohrung einsetzbar ist.

Der äußere Klemmkörper ist mit einer Durchgangsöffnung versehen, die mit dem Innenraum des Lochrohres in Verbindung steht, so dass durch diese Durchgangsöffnung eine zunächst fließfähige, dann expandierende und erhärtende Füllsubstanz in das Lochrohr einfüllbar ist, die aus einer Vielzahl von kleinen Löchern aus dem Lochrohr austritt und Hohlräume in der Wandbohrung ausfüllt, so dass der Zwischenraum der Wandbohrung abgedichtet ist.

Auch der äußere Klemmkörper und das Lochrohr können aus einem thermoplastischen Kunststoff wie ABS bestehen.

Weitere Einzelheiten der Erfindung ergeben sich aus der nachfolgenden Beschreibung einer bevorzugten Ausführungsform sowie anhand der Zeichnungen. Dabei zeigen:
- Figur 1: eine Ausführungsform der Vorrichtung bei horizontaler Durchführung einer Speedpipe durch eine aus Hohlblocksteinen bestehende angedeutete Wand;
- Figur 2: eine weitere Ausführungsform bei schräger Durchführung einer Speedpipe durch eine Wand;
- Figur 3: eine Ausführungsform des inneren Klemmkörper in vergrößerter Darstellung;
- Figur 4: eine andere Sicht auf den inneren Klemmkörper der Figur 3.

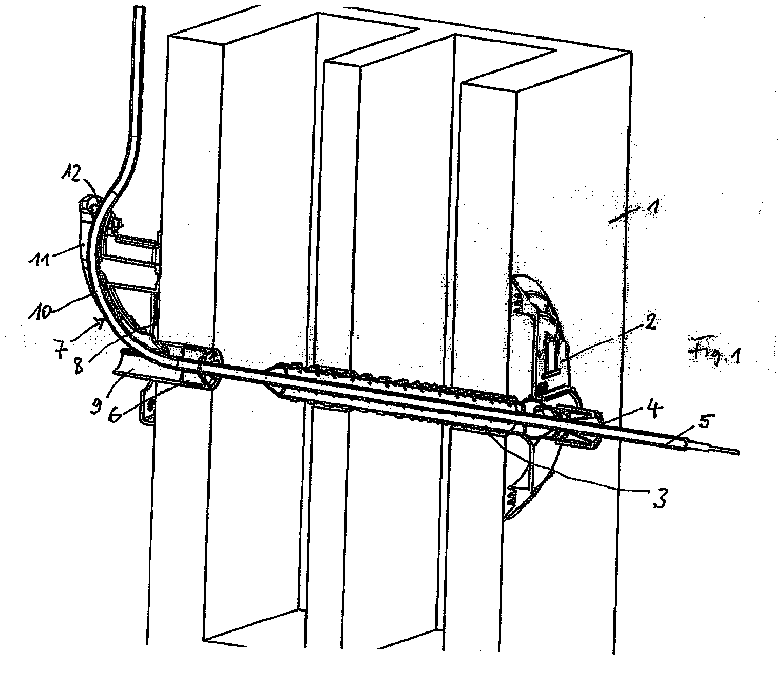

In Figur 1 ist die rechte Wandseite 1 die Gebäudeaußenseite. Durch die mit Hohlblocksteinen angedeutete Wand führt eine horizontale Wandbohrung, die an der Gebäudeaußenseite von einem äußeren Klemmkörper 2 überdeckt wird, der im wesentlichen eine Tellerform hat und mit seinem Rand dicht an der Gebäudewand anliegt. An der Innenseite des äußeren Klemmkörpers 2 ist ein Lochrohr 3 gelenkig befestigt, das eine durch eine Öffnung 4 in dem äußeren Klemmkörper 2 eingeführte Speedpipe 5 mit Abstand umgibt.

Die Speedpipe 5 tritt auf der anderen Seite der Wand in einen rohrförmigen Abschnitt 6 eines inneren Klemmkörper 7 ein, der über biegbare Stege einstückig mit einem rahmenartigen Abschnitt 8 des inneren Klemmkörpers 7 verbunden ist, der dicht an der Innenwand an der Gebäudeinnenseite anliegt. Der rahmenförmige Abschnitt 8 ist in diesem Fall in einem Winkel von 90° gegenüber dem rohrförmigen Abschnitt 6 angeordnet.

Der rohrförmige Abschnitt 6 ist wie ein Dübel in die Wandbohrung eingesetzt und wird von Rippen oder Flügeln an einem Außenumfang sicher in der Wandbohrung gehalten.

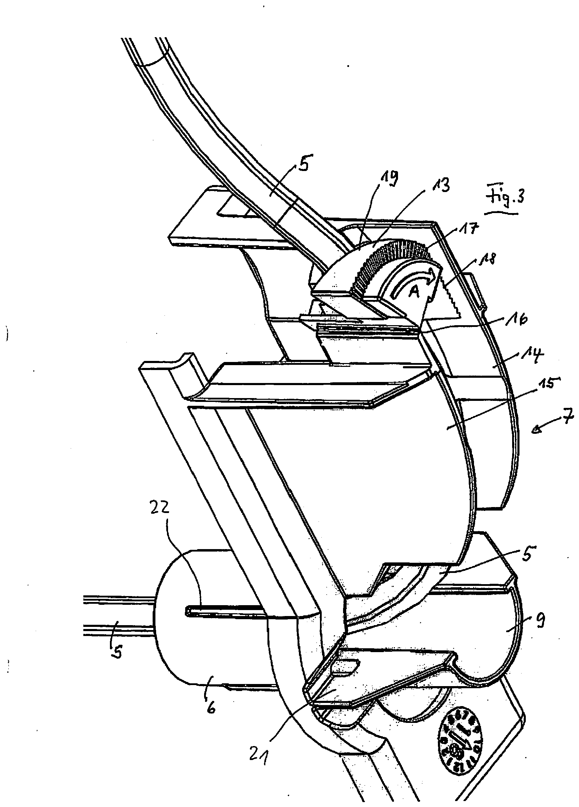

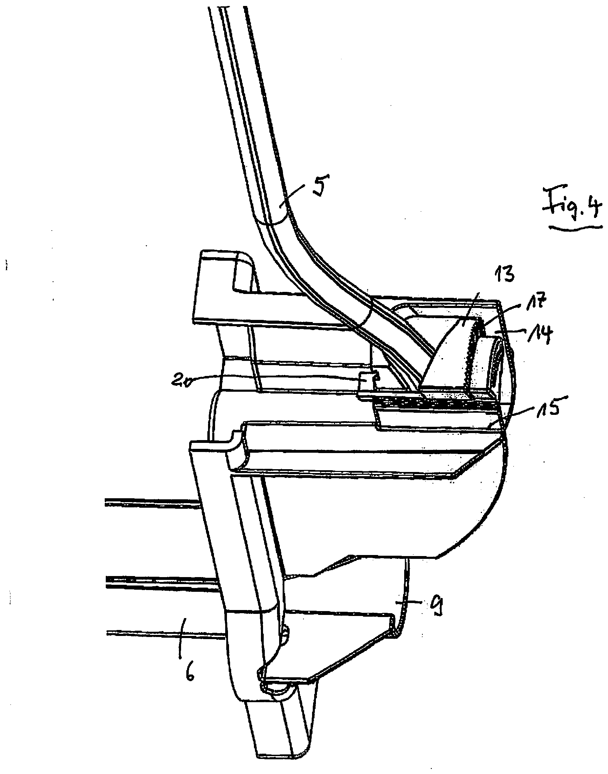

Der rohrförmige Abschnitt 6 setzt sich außerhalb der Wand als oben offener, rinnenförmiger Abschnitt 9 fort, so dass die Speedpipe 5 nach oben aus dem rinnenförmigen Abschnitt 9 austreten kann. Die Speedpipe 5 wird an einer gekrümmten Führungsbahn 10 nach oben geführt und verläuft zwischen Stegpaaren 11 zu einer Austrittsöffnung 12 aus dem inneren Klemmkörper 7. In dem Bereich der Austrittsöffnung 12 ist ein drehbarer Riegel 13 angeordnet, der mit Bezug auf die Figuren 3 und 4 weiter unten beschrieben wird.

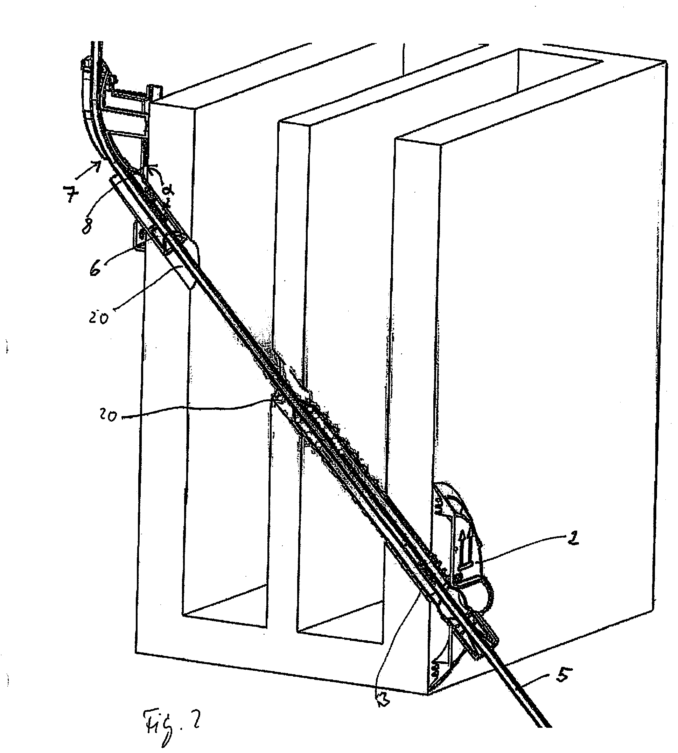

Figur 2 zeigt eine Ausführungsform der Wanddurchführung mit einer von außen schräg nach oben zur Innenseite der Wand verlaufenden Wandbohrung 20. Da das Lochrohr 3 gelenkig mit dem äußeren Klemmkörper 2 verbunden ist, kann auch der äußere Klemmkörper 2 dicht an der Gebäudewand anliegen. Der Winkel zwischen dem rohrförmigen Abschnitt 6 und dem rahmenförmigen Abschnitt 8 des inneren Klemmkörpers 7 ist veränderbar, da diese beiden Abschnitte durch biegbare Stege miteinander verbunden sind. Der Winkel α beträgt im dargestellten Beispiel ungefähr 135°.

Figur 3 zeigt Einzelheiten des inneren Klemmkörpers 7 in einem vergrößerten Maßstab und einem anderen Blickwinkel. Die Speedpipe 5 wird in den rohrförmigen Abschnitt 6 eingeführt, der sich als oben offene Rinne 9 einstückig fortsetzt. Die Speedpipe 5 wird zwischen zwei voneinander beabstandeten Stegen 14, 15 auf einer gekrümmten Bahn nach oben geführt und von dem Riegel 13 in Anlage an der gekrümmten Bahn gehalten. Der Riegel 13 ist über ein Filmscharnier 16 mit einer Oberkante des Stegs 15 gelenkig verbunden, so dass der Riegel 13 in Richtung des Pfeils A drehbar an der Oberkante des Stegs 15 befestigt ist. Der Riegel 13 hat eine kreisförmige Verzahnung 17, die infolge einer Drehung des Riegels 13 in eine gegenüberliegende Verzahnung 18 an dem anderen Steg 14 eingreift.

An der der gekrümmten Führungsbahn zugewandten Rückseite des Riegels 13 befindet sich eine Auflaufschräge bzw. Steigung 19, die sich mit zunehmender Drehung des Riegels 13 kontinuierlich an der Stelle verbreitert, an der sie an der Speedpipe 5 anliegt. Dies hat zur Folge, dass die Speedpipe 5 zunehmend in Richtung der Wandfläche gedrückt wird. Mit Hilfe dieses Exzenter-Riegels 13 können Speedpipe verschiedener Durchmesser in der gewünschten Weise ausgerichtet werden, wobei vermieden wird, das austretende Speedpipes (oder Kabel) schräg von der Wand in den Raum abstehen.

Figur 4 lässt zudem erkennen, dass der Riegel 13 mit einem hakenförmigen Ansatz 20 versehen ist, der in eine gegenüberliegende Ausnehmung eingreift, so dass die Drehposition des Riegels 13 auch dann aufrecht erhalten wird, wenn das Filmscharnier 16 wegen Beschädigung ausfallen sollte.

Es wird betont, dass die Erfindung nicht auf die beschriebenen und dargestellten Ausführungsformen beschränkt ist, Vielmehr sind alle offenbarten Merkmale auf jede sinnvolle Weise einzeln miteinander kombinierbar.

## Patentansprüche

1. Vorrichtung zum Durchführen wenigstens einer Leitung durch eine Wandbohrung, die durch eine Gebäudewand führt, mit einem die Wandbohrung an der Gebäudeaußenseite überdeckenden, an der Gebäudewand anliegenden äußeren Klemmkörper (2), der ein Loch (4) zum Einführen der Leitung hat, und einem die Wandbohrung an der Gebäudeinnenseite überdeckenden, an der Gebäudewand anliegenden inneren Klemmkörper (7), durch den die Leitung austritt,
**dadurch gekennzeichnet,**
**dass** die Leitung wenigstens eine Speedpipe (5) oder wenigstens ein Kabel ohne ein umgebendes Schutzrohr ist,
**dass** mit dem äußeren Klemmkörper (2) an dessen Innenseite ein Lochrohr (3) verbunden ist, das die wenigstens eine Speedpipe oder das wenigstens eine Kabel in der Wandbohrung mit radialem Abstand umgibt,
**dass** der innere Klemmkörper (7) einen rohrförmigen Abschnitt (6), durch den die wenigstens eine Speedpipe (5) oder das wenigstens eine Kabel durchführbar ist und der in die Wandbohrung eingesetzt wird, und einen im unbelasteten Zustand im Winkel dazu verlaufenden rahmenartigen Abschnitt (8) aufweist, der an die Gebäudewand anpressbar ist,
**dass** an den rohrförmigen Abschnitt (6) des inneren Klemmkörpers (7) außerhalb der Wandbohrung ein vorzugsweise rinnenförmiger Abschnitt (9) anschließt, aus dem die wenigstens eine Speedpipe (5) oder das wenigstens eine Kabel zwischen voneinander beabstandete Stege (14, 15) des rahmenartigen Abschnitts (8) führbar ist, zwischen denen die wenigstens eine Speedpipe (5) oder das wenigstens eine Kabel entlang einer gekrümmten Führungsbahn (10) des rahmenartigen Abschnitts (8) unter Einhaltung eines zulässigen Mindestradius zu einer Austrittsöffnung (12) führbar ist, und
**dass** an einem Steg (15) ein drehbarer Riegel (13) befestigt ist, der eine Auflaufschräge bzw. Steigung (19) hat, die der Führungsbahn (10) gegenüber liegt und die Austrittsöffnung (12) für die wenigstens eine Speedpipe/das wenigstens eine Kabel je nach Drehposition des Riegels (13) begrenzt.

2. Vorrichtung nach Anspruch 1,
**dadurch gekennzeichnet,**
**dass** der Winkel etwa 90° beträgt.

3. Vorrichtung nach Anspruch 1 oder 2,
**dadurch gekennzeichnet,**
**dass** der innere Klemmkörper (7) aus einem thermoplastischen Kunststoff wie ABS besteht, der bei dünner Wandstärke verformbar bzw. biegbar und bei größerer Wandstärke starr ist.

4. Vorrichtung nach einem der Ansprüche 1 bis 3,
**dadurch gekennzeichnet,**
**dass** der Riegel (13) über ein Filmscharnier (16) mit einer seitlichen Randkante des einen Stegs (15) verbunden ist, so dass er um diese Randkante drehbar ist.

5. Vorrichtung nach Anspruch 4,
**dadurch gekennzeichnet,**
**dass** der Riegel (13) eine kreisbogenförmige Verzahnung (17) hat, die in eine kreisbogenförmige Verzahnung (18) an dem gegenüber angeordneten Steg (14) eingreift.

6. Vorrichtung nach einem der Ansprüche 1 bis 5,
**dadurch gekennzeichnet,**
**dass** der rohrförmige Abschnitt (6) und der rahmenartige Abschnitt (8) des inneren Klemmkörpers (7) durch biegbare Stege (21) einstückig verbunden sind, so dass der Winkel zwischen dem rohrförmigen Abschnitt (6) und dem rahmenartigen Abschnitt (8) veränderbar ist.

7. Vorrichtung nach einem der Ansprüche 1 bis 6,
**dadurch gekennzeichnet,**
**dass** das Lochrohr (3) durch ein Gelenk mit dem äußeren Klemmkörper (2) verbunden ist, so dass die Klemmkörper (2, 7) sowohl bei horizontaler als auch im Winkel hierzu durch die Gebäudewand führender Wandbohrung (20) dicht an die Gebäudewand anpressbar sind.

8. Vorrichtung nach einem der Ansprüche 1 bis 7,
**dadurch gekennzeichnet,**
**dass** der rohrförmige Abschnitt (6) nach Art eines Dübels mit außen abstehenden Rippen (22) ausgebildet ist, wodurch er klemmend in die Wandbohrung einsetzbar ist.

9. Vorrichtung nach einem der Ansprüche 1 bis 8,
**dadurch gekennzeichnet,**
**dass** der äußere Klemmkörper (2) eine Durchgangsöffnung aufweist, durch die eine zunächst fließfähige, dann expandierende und erhärtende Füllsubstanz in das Lochrohr einfüllbar ist.

10. Vorrichtung nach einem der Ansprüche 1 bis 9,
**dadurch gekennzeichnet,**
**dass** auch der äußere Klemmkörper (2) und das Lochrohr (3) aus einem thermoplastischen Kunststoff wie ABS bestehen.
